# EUROPEAN PATENT SPECIFICATION

(11) **EP 3 287 359 B1**
(45) Date of publication and mention of the grant of the patent: **20.03.2019**
(21) Application number: 16382400.6
(22) Date of filing: 22.08.2016
(51) Int. Cl.: B64C 1/14, B64D 41/00

(54) **DRAIN MAST OF AN AIRCRAFT**
ABLAUFMAST EINES FLUGZEUGS
MÂT DE DRAINAGE D'UN AÉRONEF

(43) Date of publication of application: 28.02.2018
(73) Proprietor: Airbus Operations, S.L., 28906 Getafe Madrid (ES)
(72) Inventor: CASADO MONTERO, Carlos, 28906 Getafe (ES); HERNANZ MANRIQUE, José Ángel, 28906 Getafe (ES); MOLINA, Alberto, 28906 Getafe (ES)
(74) Representative: Elzaburu S.L.P.

(56) References cited:
- EP-A1- 2 829 469
- EP-A1- 2 853 482
- GB-A- 2 376 269

## Description

### Field of the invention

The present invention relates to an aircraft comprising a drain mast of a compartment, receptacle or piping of the aircraft intended to drain a fluid, more particularly, to an aircraft comprising a drain mast in the compartment of an auxiliary power unit (APU) of the aircraft.

### Background of the invention

Known drainage systems of the auxiliary power unit (APU) of an aircraft comprise a mast for evacuating any liquid accumulated in the APU compartment to the atmosphere by gravity or pressure differential. Masts are supposed to release both small portions of fluid and large fluid leakages being this last case the sizing case.

As described above, a drain mast is intended to evacuate fluid as a result of a failure, malfunction or similar. Being this purpose the first criteria to satisfy for certification, it is usually accompanied with the requirement, in case of flammable fluids, of avoiding that the drained liquid impinges onto an external hot area of the aircraft that could start a fire.

For satisfying that second requirement, the mast should avoid the fluid from attaching to the skin of the fuselage. Sometimes, it is not a question of safety but it is a cosmetic issue where the fluid, oil in this case, creates stains causing inspections, complaints or cleaning operations.

The known APU drain mast consists in a tube with or without a chamfered end. Said tube comprises:
- a first end configured for being connected to the compartment of the aircraft,
- a second end configured for discharging said liquid to the atmosphere,
- an inner surface configured for being exposed to the drained liquid, and
- an outer surface that can be exposed to the airflow surrounding the drain mast.

GB 2376269 A discloses a turbofan engine lubrication system, for lubricating a gearbox, and bearings, that comprises a tank, and a separator, which has a breather outlet. The breather outlet comprises a breather duct, with an exhaust outlet arranged to discharge oil and air from the separator into a fan duct via at least one passage, in at least one of the fan outlet guide vanes of the engine. Discharge from a vane may occur through a plurality of apertures extending through the convex surface of the vane, or via a venturi eductor.

EP 2853482 A1 discloses a drain mast that includes a first fairing body defining a first fairing wall and a first drain portion. A second fairing body defines a second fairing wall and a second drain portion. The first and second fairing bodies are joined together as a fairing with the first and second fairing walls as opposed exterior fairing walls, and with the first and second drain portions joined to form a drain passage through the fairing from a drain passage inlet to a drain passage outlet.

EP 2829469 A1 discloses a drainage mast able to drain effectively the liquid contained in the compartment of an aircraft when the pressure within the compartment is lesser than the outside pressure without using any pressure control active device and without causing any significant perturbation to the aerodynamic behavior of the aircraft. The drainage mast is configured with a cross section area decreasing from its entry section to the compartment to its outlet section and is disposed at an acute angle relative to the compartment in the airflow direction. Their entry and outlet sections have two perpendicular symmetry axes of different length, the entry section is arranged with its longer axis of symmetry substantially parallel to the airflow direction. The drainage mast has a symmetrical configuration with respect to a plane substantially perpendicular to the fuselage envelope passing through the longer axis of symmetry of the entry section.

Each drain mast usually has a receptacle intended to receive the fluid from any source. This receptacle is able to lead the fluid towards the final tube. The shape of the mast makes the droplets of fluid to run through the inner surface of the tube and finally they are released to the ambient. Therefore the liquid film runs freely in the inner wall of the tube.

In case of having small leakages, the droplets are not always well released and it is frequent that once a droplet achieves the open end of the tube, instead of being released to the atmosphere, it is adhered to the outer surface of the tube going up till the fuselage because when the aircraft is flying the airflow can be powerful enough to promote the droplet to the rear outer surface of the drain mast or they are released and adhered to the fuselage by the airflow.

In addition to the previously stated drawbacks related to the improper release of the droplets, these masts are also a source of parasite drag to the aircraft.

The invention herein described tries to avoid these phenomena.

### Summary of the invention

The invention has been applied to the APU compartment but it can also be applied to other areas of the aircraft where drain masts are located.

The object of the invention would be to control the droplets leaking path in order to avoid fuselage contamination without impacting in the parasitic drag.

The claimed aircraft comprises a drain mast for draining liquids from the aircraft, the drain mast comprising a tube comprising:
- a first end configured for being connected to a source of liquids to be drained from the aircraft,
- a second end configured for discharging said liquids to the atmosphere,
- an inner longitudinal surface configured for being exposed to the drained liquid, and
- an outer longitudinal surface,
wherein the drain mast further comprises a pipe coupled to the inner longitudinal surface of the tube and configured such that the drained liquid flows from the tube to the pipe, the pipe comprising:
- a first straight part with an inlet having its longitudinal axis configured for being confronted to the coming airflow for allowing the inlet of said coming airflow into the pipe, and
- a second straight part with an outlet having its longitudinal axis inclined with respect to the longitudinal axis of the first straight part with an inlet and configured to be arranged such that it discharges the airflow and the drained liquid flowing through the pipe in a direction inclined with a component perpendicular to the fuselage of the aircraft,
wherein the tube further comprises an internal rim located at its second end connected to the inner surface of the tube the internal rim further comprising an aperture being located at the lowest part of the internal rim for draining the liquid, the internal rim and the aperture being configured such that at the second end the liquid is directed by gravity through the internal rim to the aperture.

The pipe could further comprise a duct diametrically located in a cross-section of the pipe and having an end coupled to the inner longitudinal surface of the tube such that the drained liquid flows from the tube to the pipe through the duct, the duct further comprising an opening in the side of the duct pointing towards the airflow direction, i.e., in the face of the duct opposite to the incoming airflow, such that the opening creates a suction effect that sucks the drained liquid from the duct to the pipe.

The invention discloses, therefore, a tube connectable to the below part of the compartment that avoids the adherence of droplets to the fuselage by a further pipe having an inlet allowing the entrance of the coming airflow as it is located confronted to the free air stream. The air is accelerated into the pipe since the flow close to the fuselage is low energy air. Optionally, at certain stage of the pipe could be a duct, having its longitudinal axis diametrically located with respect to a cross-section of the pipe, having an opening into the pipe that drains the evacuated liquid into the pipe.

The accelerated airflow creates a suction effect that sucks the drained liquid drops from the tube to the pipe and then they are released to the atmosphere.

Drops are broken into multiple and smaller droplets that are further accelerated due to said smaller size. In order to reach an optimum size of the droplets, a Mach number of 0.3 would be advisable.

The longitudinal axis of the second straight part with the outlet of the pipe is inclined with respect to the longitudinal axis of the first straight part with the inlet and also with respect to the longitudinal axis of the fuselage such that the pipe provides at its outlet a velocity component inclined to the free airstream. Thanks to this component, the fluid will be ejected opposite to the fuselage by the drain mast, therefore avoiding its adherence to it.

The claimed drain mast achieves the following phenomena:
a) first off all, drops are broken up thus generating a fine spray once they are ingested into the flow of the pipe, in the remaining piping length the small droplets are accelerated.
b) afterwards the spray is discharged to the ambient, inclined with a certain angle and having a perpendicular component to the free airstream thanks to the second part of the pipe that provides the fluid with a momentum having a perpendicular component to the free airstream.

Therefore, two advantages of the device are that it guarantees the correct detachment of the drop or drops from the drain mast and it provides the released fluid/drops with a velocity component that ejects the fluid far from the skin of the fuselage. Once the drop is ingested in the accelerated flow of the pipe, a spray is formed and fully developed, this spray allows to reduce the momentum response time and, therefore, to accelerate the fluid in a shortest distance.

The claimed drain mast has reduced dimensions, is light and easy to manufacture as well as a non-expensive system. Another advantage is that there are no changes in the compartment design of the aircraft and it is easy to attach to the wall of the compartment.

It is also an object of the present invention an aircraft comprising a drain mast for draining liquids according to the above technical features, wherein the drain mast is comprised in the auxiliary power unit of the aircraft.

### Brief description of the drawings

Figures 1A and 1B show schematic longitudinal and cross sections of a drain mast of the state of the art showing the behavior of a fluid droplet.
Figure 2 shows a schematic longitudinal section of an embodiment of the drain mast.
Figure 3 shows an schematic view showing the pipe and duct of the embodiment of Figure 2.
Figure 4 shows a schematic representation of an embodiment of the pipe.

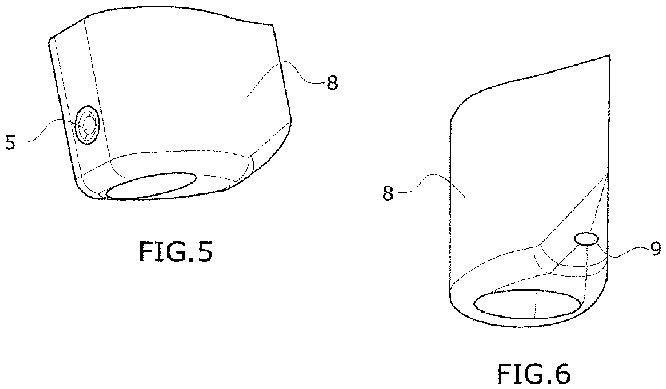

Figure 5 and 6 show schematic representations of a fairing of the embodiment shown in Figure 2.

### Detailed description of the invention

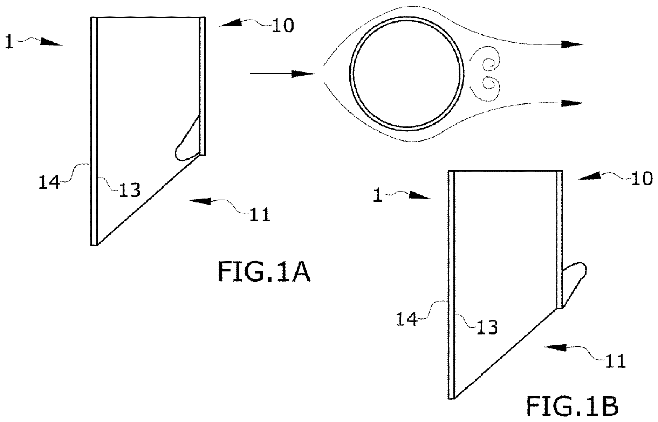

Figure 1A illustrates the basic components of a known drain mast of an APU compartment of an aircraft, the drain mast comprising a tube (1) having a first end (10) connected to the APU compartment and a second end (11) for discharging the liquids to the atmosphere. The APU compartment is usually located in the tail cone of the aircraft close to the fuselage and receives the liquids leaked by the APU. The tube (1) could also be connected to a receptacle or piping of the aircraft intended to drain a fluid.

As can be seen in Figures 1, the distribution of the airflow in the outer surface (14) of the tube (1) opposite to the surface facing the coming airflow promotes the adherence of the droplets of liquid to the outer surface (14) of the tube (1) such that the droplet runs over said outer surface (14) as it is depicted in Figure 1B. As previously stated, another option is that the drop or drops are firstly released to the atmosphere but afterwards adhered again to the fuselage by the airflow.

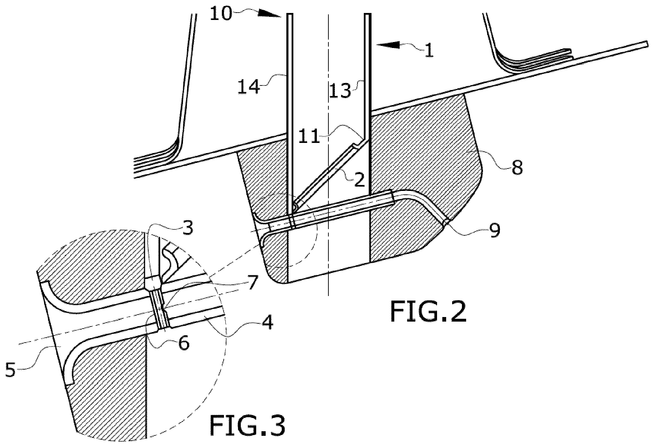

Figure 2 shows an embodiment of the invention in which the drain mast has the tube (1) comprising:
- a first end (10) connected to the compartment of the aircraft,
- a second end (11) for discharging said liquids to the atmosphere and additionally this second end (11) could be configured for being located in a plane inclined with respect to the fuselage,
- an inner longitudinal surface (13) configured for being exposed to the drained liquid, and
- an outer longitudinal surface (14),

The pipe (4) comprises an inlet (5) allowing the entrance of the coming airflow and an outlet (9) in a second straight part that has its longitudinal axis inclined with respect to the longitudinal axis of a first straight part comprising the inlet (5).

The depicted embodiment also comprises a duct (6) located diametrically with respect to the pipe (4) and having an end coupled to the inner longitudinal surface (13) of the tube (1) such that the drained liquid flows from the tube (1) to the duct (6). The duct (6) further comprises an opening (7) in the side of the duct (6) pointing towards the airflow direction or, what is the same, the opening (7) is located in the face of the duct (6) opposite to the face of the duct (6) facing the incoming flow.

Figure 3 shows that the opening (7) of the duct (6) is located in the center of the cross-section of the pipe (4), wherein the maximum speed for the airflow is obtained, although the opening (7) could be located in a different location or the duct (6) can comprise several openings (7) in the face of the duct (6) that is located opposite to the incoming airflow, or, in the worst case, even not having a duct (6) and therefore the tube (1) directly discharging to the pipe (4).

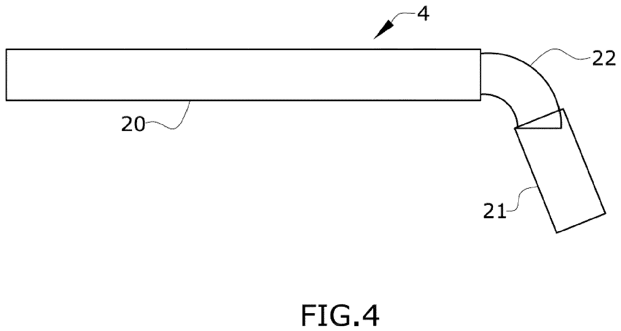

More specifically, Figure 4 shows an embodiment wherein the pipe (4) comprises a first straight part (20) in which the drops are released into the pipe (4) and accelerated and a second straight part (21) in which the drops are finally released to the atmosphere with an inclination with respect to the first straight part (20). The pipe (4) also comprises a bended part (22) located in between the first and the second straight parts (20, 21). The first part (20) has to be long enough to provide enough speed to the drops, obtaining a quick acceleration of them. More specifically the length of the first part (20) of the pipe (4) is between 5-22 mm to fully develop the spray.

The spray is accelerated along the first part (20) of the pipe (4), due to the small size of the droplets and the coming airflow, the inertia forces has less effect and therefore the pipe (4) can be bended avoiding in such a way a possible adherence of the spray to the inner walls of the pipe (4).

To lead the liquid coming from the walls of the tube (1) to the pipe (4) or to duct (6) are several solutions, one is to incline the tube (1) rearwards then forcing to fall down the fluid onto the inner front face of the tube (1) and run down by gravity through this face. In this case, the longitudinal axis of the tube (1) is located in an inclined position with respect to the fuselage of the aircraft.

The second end (11) of the tube (1) further comprises:
- an internal rim (2) located at its second end (11) connected to the inner surface (13) of the tube (1) and configured for being located in a plane inclined with respect to the horizontal plane of the fuselage, the internal rim (2) further comprising an aperture (3) being located at the lowest part of the internal rim (2) for draining the liquid,
- the internal rim (2) and the aperture (3) being configured such that at the second end (11) the liquid is directed by gravity through the internal rim (2) to the aperture (3).

Said internal rim (2) can be located in a tube (1) having a chamfered end (11) the rim (2) being located following the profile of said chamfered end (11) or it can be located in a tube (1) with a straight end being the rim (2) in a plane inclined with respect to the fuselage.

Therefore, drops approaching the open end runs by gravity over the internal rim (2) and are guided to the second end (11) thanks to its inclination and thus to the inclination of the internal rim (2) connected to said second end (11).

The drain mast also comprises a fairing (8) having an aerodynamic shape to reduce drag, the fairing (8) surrounds the pipe (4) and the end of the tube (1). The faring (8) comprises two orifices, the inlet (3) and the outlet (9) of the pipe (4).

## Claims

1. Aircraft comprising a drain mast for draining liquids from the aircraft, the drain mast comprising a tube (1) comprising:
- a first end (10) configured for being connected to a source of liquids to be drained from the aircraft,
- a second end (11) configured for discharging said liquids to the atmosphere,
- an inner longitudinal surface (13) configured for being exposed to the drained liquid, and
- an outer longitudinal surface (14),
wherein the drain mast further comprises a pipe (4) coupled to the inner longitudinal surface (13) of the tube (1) and configured such that the drained liquid flows from the tube (1) to the pipe (4), the pipe (4) comprising:
- a first straight part (20) with an inlet (5) having its longitudinal axis configured for being confronted to the coming airflow for allowing the inlet of said coming airflow into the pipe (4), and
- a second straight part (21) with an outlet (9) having its longitudinal axis inclined with respect to the longitudinal axis of the first straight part (20) with an inlet (5) and configured to be arranged such that it discharges the airflow and the drained liquid flowing through the pipe (4) in a direction inclined with a component perpendicular to the fuselage of the aircraft,
**characterized in that** the tube (1) further comprises an internal rim (2) located at its second end (11) connected to the inner surface (13) of the tube (1), the internal rim (2) further comprising an aperture (3) being located at the lowest part of the internal rim (2) for draining the liquid, the internal rim (2) and the aperture (3) being configured such that at the second end (11) the liquid is directed by gravity through the internal rim (2) to the aperture (3).

2. Aircraft comprising a drain mast for draining liquids according to claim 1 wherein the pipe (4) further comprises a duct (6) diametrically located in a cross-section of the pipe (4) and having an end coupled to the inner longitudinal surface (13) of the tube (1) such that the drained liquid flows from the tube (1) to the pipe (4) through the duct (6), the duct (6) further comprising an opening (7) located in the face of the duct (6) opposite to the face of the duct (6) facing the incoming flow such that the opening (7) and the airflow create a suction effect that sucks the drained liquid from the duct (6) to the pipe (4).

3. Aircraft comprising a drain mast for draining liquids according to claim 2, wherein the opening (7) of the duct (6) is located in the center of the cross-section of the pipe (4).

4. Aircraft comprising a drain mast for draining liquids according to claim 2, wherein the duct (6) comprises several openings (7) in the side of the duct (6) pointing towards the airflow direction.

5. Aircraft comprising a drain mast for draining liquids according to any preceding claim, wherein the longitudinal axis of the tube (1) is configured to be arranged in an inclined position with respect to the fuselage of the aircraft.

6. Aircraft comprising a drain mast for draining liquids according to any preceding claim, wherein the second end (11) of the tube (1) is configured to be arranged in a plane inclined with respect to the fuselage of the aircraft.

7. Aircraft comprising a drain mast for draining liquids, according to any preceding claim, wherein it comprises a fairing (8) enclosing the pipe (4) and the end of the tube (1) and having an aerodynamic shape for reducing drag.

8. Aircraft comprising a drain mast for draining liquids, according to any preceding claim, wherein the pipe (4) comprises a first straight part (20) wherein the liquid is released into the pipe (4) and accelerated, a second straight part (21) wherein the accelerated liquid is released to the atmosphere, having the second straight part (21) an inclination with respect to the first straight part (20) and a bended part (22) located in-between the first and the second straight parts (20, 21).

9. Aircraft comprising a drain mast for draining liquids, according to any preceding claim, wherein the drain mast is comprised in the auxiliary power unit of the aircraft.

## Patentansprüche

1. Flugzeug mit einem Ablassmast zum Ablassen von Flüssigkeiten vom Flugzeug, wobei der Ablassmast ein Rohr (1) aufweist, mit:
einem ersten Ende (10), das dafür konfiguriert ist, mit einer Flüssigkeitsquelle verbunden zu werden, die vom Flugzeug abgelassen werden soll;
einem zweiten Ende (11), das dafür konfiguriert ist, die Flüssigkeiten in die Atmosphäre abzulassen;
einer inneren Längsfläche (13), die dafür konfiguriert ist, der abgelassenen Flüssigkeit ausgesetzt zu werden; und
einer äußeren Längsfläche (14),
wobei der Ablassmast ferner eine Leitung (4) aufweist, das mit der inneren Längsfläche (13) des Rohrs (1) verbunden und derart konfiguriert ist, dass die abgelassene Flüssigkeit vom Rohr (1) eine Leitung (4) strömt, wobei die Leitung (4) aufweist:
einen ersten geraden Abschnitt (20) mit einem Einlass (5), dessen Längsachse derart konfiguriert ist, dass der Einlass dem ankommenden Luftstrom zugewandt ist, um zu ermöglichen, dass der ankommende Luftstrom in die Leitung (4) eintritt; und
einen zweiten geraden Abschnitt (21) mit einem Auslass (9), dessen Längsachse in Bezug auf die Längsachse des ersten geraden Abschnitts (20) mit dem Einlass (5) geneigt ist, wobei der zweite gerade Abschnitt derart konfiguriert ist, dass er so angeordnet ist, dass er den Luftstrom und die abgelassene Flüssigkeit, die durch die Leitung (4) strömen, in eine Richtung ablässt, die bezüglich einer sich senkrecht zum Rumpf des Flugzeugs erstreckenden Komponente geneigt ist;
**dadurch gekennzeichnet, dass**
das Rohr (1) ferner einen inneren Rand (2) aufweist, der an seinem zweiten Ende (11) angeordnet und mit der Innenfläche (13) des Rohrs (1) verbunden ist, wobei der innere Rand (2) ferner eine am untersten Teil des inneren Randes (2) angeordnete Öffnung (3) zum Ablassen der Flüssigkeit aufweist, wobei der innere Rand (2) und die Öffnung (3) derart konfiguriert sind, dass am zweiten Ende (11) die Flüssigkeit durch die Schwerkraft durch den inneren Rand (2) zur Öffnung (3) geleitet wird.

2. Flugzeug nach Anspruch 1, wobei das Rohr (4) ferner einen Kanal (6) aufweist, der in einem Querschnitt des Rohrs (4) diametral angeordnet ist und ein Ende aufweist, das mit der inneren Längsfläche (13) des Rohrs (1) verbunden ist, so dass die abgelassene Flüssigkeit vom Rohr (1) durch den Kanal (6) zur Leitung (4) strömt, wobei der Kanal (6) ferner eine Öffnung (7) aufweist, die in der Seite des Kanals (6) angeordnet ist, die der Seite des Kanals (6) gegenüberliegt, die dem ankommenden Luftstrom zugewandt ist, so dass die Öffnung (7) und der Luftstrom eine Saugwirkung erzeugen, die die abgelassene Flüssigkeit vom Kanal (6) in die Leitung (4) saugt.

3. Flugzeug nach Anspruch 2, wobei die Öffnung (7) des Kanals (6) in der Mitte des Querschnitts der Leitung (4) angeordnet ist.

4. Flugzeug nach Anspruch 2, wobei der Kanal (6) mehrere Öffnungen (7) in der Seite des Kanals (6) aufweist, die in Richtung des Luftstroms weisen.

5. Flugzeug, nach einem der vorangehenden Ansprüche, wobei die Längsachse des Rohrs (1) derart konfiguriert ist, dass sie in einer geneigten Position bezüglich des Rumpfs des Flugzeugs angeordnet ist.

6. Flugzeug nach einem der vorangehenden Ansprüche, wobei das zweite Ende (11) des Rohrs (1) derart konfiguriert ist, dass es in einer Ebene angeordnet ist, die bezüglich des Rumpfs des Flugzeugs geneigt ist.

7. Flugzeug nach einem der vorangehenden Ansprüche, wobei das Flugzeug eine Verkleidung (8) aufweist, die die Leitung (4) und das Ende des Rohrs (1) umschließt und eine aerodynamische Form zum Reduzieren des Luftwiderstands hat.

8. Flugzeug nach einem der vorangehenden Ansprüche, wobei die Leitung (4) einen ersten geraden Abschnitt (20), in dem die Flüssigkeit in die Leitung (4) abgegeben und beschleunigt wird, einen zweiten geraden Abschnitt (21), in dem die beschleunigte Flüssigkeit an die Atmosphäre abgegeben wird, wobei der zweite gerade Abschnitt (21) bezüglich des ersten geraden Abschnitts (20) geneigt ist, und einen zwischen dem ersten und dem zweiten geraden Abschnitt (20, 21) angeordneten gebogenen Abschnitt (22) aufweist.

9. Flugzeug nach einem der vorangehenden Ansprüche, wobei der Ablassmast im Hilfstriebwerk des Flugzeugs angeordnet ist.

## Revendications

1. Aéronef comprenant un mât d'évacuation pour évacuer des liquides de l'aéronef, le mât d'évacuation comprenant un tube (1), comprenant :
- une première extrémité (10) configurée de façon à être reliée à une source de liquides devant être évacués de l'aéronef,
- une deuxième extrémité (11) configurée de façon à décharger lesdits liquides vers l'atmosphère,
- une surface longitudinale intérieure (13) configurée de façon à être exposée au liquide évacué, et
- une surface longitudinale extérieure (14),
dans lequel le mât d'évacuation comprend de plus un tuyau (4) couplé à la surface longitudinale intérieure (13) du tube (1), et configuré de telle sorte que le liquide évacué s'écoule du tube (1) au tuyau (4), le tuyau (4) comprenant :
- une première partie droite (20) avec un orifice d'entrée (5) ayant son axe longitudinal configuré de façon à être confronté à l'écoulement d'air arrivant afin de permettre l'entrée dudit écoulement d'air arrivant dans le tuyau (4), et
- une deuxième partie droite (21) avec un orifice de sortie (9) ayant son axe longitudinal incliné par rapport à l'axe longitudinal de la première partie droite (20) avec un orifice d'entrée (5), et configurée de façon à être agencée de telle sorte qu'elle décharge l'écoulement d'air et le liquide évacué s'écoulant à travers le tuyau (4) dans une direction inclinée avec une composante perpendiculaire au fuselage de l'aéronef,
**caractérisé en ce que** le tube (1) comprend de plus un rebord intérieur (2) disposé à sa deuxième extrémité (11) relié à la surface intérieure du tube (1), le rebord intérieur (2) comprenant de plus une ouverture (3) qui est disposée à la partie la plus basse du rebord intérieur (2) de façon à évacuer le liquide, le rebord intérieur (2) et l'ouverture (3) étant configurés de telle sorte qu'à la deuxième extrémité (11), le liquide soit dirigé par gravité à travers le rebord intérieur (2) vers l'ouverture (3).

2. Aéronef comprenant un mât d'évacuation pour évacuer des liquides selon la revendication 1, dans lequel le tuyau (4) comprend de plus un conduit disposé de façon diamétrale dans une section transversale du tuyau (4), et comportant une extrémité couplée à la surface longitudinale intérieure (13) du tube (1) de telle sorte que le liquide évacué s'écoule du tube (1) au tuyau (4) à travers le conduit (6), le conduit (6) comprenant de plus une ouverture (7) disposée dans la face du conduit (6) opposée à la face du conduit (6) faisant face à l'écoulement entrant, de telle sorte que l'ouverture (7) et l'écoulement d'air créent un effet d'aspiration qui aspire le liquide évacué du conduit (6) au tuyau (4).

3. Aéronef comprenant un mât d'évacuation pour évacuer des liquides selon la revendication 2, dans lequel l'ouverture (7) du conduit (6) est disposée dans le centre de la section transversale du tuyau (4).

4. Aéronef comprenant un mât d'évacuation pour évacuer des liquides selon la revendication 2, dans lequel le conduit (6) comprend plusieurs ouvertures (7) dans le côté du conduit (6) pointant vers la direction d'écoulement d'air.

5. Aéronef comprenant un mât d'évacuation pour évacuer des liquides selon l'une quelconque des revendications précédentes, dans lequel l'axe longitudinal du tube (1) est configuré de façon à être disposé dans une position inclinée par rapport au fuselage de l'aéronef.

6. Aéronef comprenant un mât d'évacuation pour évacuer des liquides selon l'une quelconque des revendications précédentes, dans lequel la deuxième extrémité (11) du tube (1) est configurée de façon à être disposée dans un plan incliné par rapport au fuselage de l'aéronef.

7. Aéronef comprenant un mât d'évacuation pour évacuer des liquides selon l'une quelconque des revendications précédentes, dans lequel il comprend un carénage (8) renfermant le tuyau (4) et l'extrémité du tube (1), et ayant une forme aérodynamique pour réduire la traînée.

8. Aéronef comprenant un mât d'évacuation pour évacuer des liquides selon l'une quelconque des revendications précédentes, dans lequel le tuyau (4) comprend une première partie droite (20) dans laquelle le liquide est relâché dans le tuyau (4) et accéléré, une deuxième partie droite (21) dans laquelle le liquide accéléré est relâché dans l'atmosphère, la deuxième partie droite (21) ayant une inclinaison par rapport à la première partie droite (20), et une partie incurvée (22) disposée entre les première et deuxième parties droites (20, 21).

9. Aéronef comprenant un mât d'évacuation pour évacuer des liquides selon l'une quelconque des revendications précédentes, dans lequel le mât d'évacuation est inclus dans l'unité de puissance auxiliaire de l'aéronef.
